# EUROPÄISCHE PATENTSCHRIFT

(11) **EP 1 629 202 B1**
(45) Veröffentlichungstag und Bekanntmachung des Hinweises auf die Patenterteilung: **07.11.2007**
(21) Anmeldenummer: 04723189.9
(22) Anmeldetag: 25.03.2004
(51) Int. Cl.: F04C 2/10, F16B 19/00

(54) **ZAHNRADPUMPE UND HALTEGLIED HIERFÜR**
GEAR PUMP AND HOLDING ELEMENT THEREFOR
POMPE A ENGRENAGES ET ELEMENT DE MAINTIEN POUR CETTE DERNIERE

(30) Priorität: 03.06.2003 DE 10325025
(43) Veröffentlichungstag der Anmeldung: 01.03.2006
(73) Patentinhaber: Brueninghaus Hydromatik GmbH, 89275 Elchingen (DE)
(72) Erfinder: WANSCHURA, Günter, 89077 Ulm (DE); KUDERMANN, Wolfram, 89250 Senden (DE); SCHNIEDERJAN, Reinhold, 89233 Neu-Ulm (DE)
(74) Vertreter: Körfer, Thomas
(86) Internationale Anmeldenummer: PCT/EP2004/003186
(87) Internationale Veröffentlichungsnummer: WO 2004/106744

(56) Entgegenhaltungen:
- US-A- 3 315 608
- US-A- 3 791 779
- US-A- 4 344 717
- US-A- 4 978 266
- US-A- 5 907 891
- US-B1- 6 231 223

## Beschreibung

Die Erfindung betrifft eine Zahnradpumpe und ein Halteglied zum drehwinkelfixierten Halten einer Verschlussplatte an den Pumpendeckel der Zahnradpumpe.

Eine Zahnradpumpe nach dem Oberbegriff des Anspruch 1 ist z. B. aus der DE 27 58 376 A1, der DE 36 20 705 A1 und der US 3 315 608 bekannt.

Üblicher Weise wird das Hydraulikfluid für den Ansaugkanal einer Hydropumpe aus einem Hydrauliktank, in dem ein Niederdruck herrscht, über eine Zahnradpumpe auf einen für den Ansaugkanal geeigneten Vordruck komprimiert. Die Zahnradpumpe ist in einem Pumpendeckel, der in der Endmontage an eine Anschlussplatte der Hydropumpe geschraubt wird, über einen in einer Ausnehmung des Pumpendeckels drehbar gelagerten Innen- und Außenläufer realisiert. Der Innenläufer ist auf einer Steckwelle rotationsfixiert befestigt, die von der Antriebswelle der Hydraulikpumpe angetrieben wird. Aufgrund der exzentrischen Lagerung der beiden Drehachsen von Innen- und Außenläufer sind Innen- und Außenläufer nur in einem bestimmten Drehwinkelbereich α zueinander in Eingriff. In einem diesem Drehwinkelbereich gegenüberliegenden zweiten Drehwinkelbereich β ist in der Ausnehmung des Pumpendeckels ein sichelförmiger Steg angeordnet, mit dessen innenseitiger Fläche der Innenläufer und mit dessen außenseiter Fläche der Außenläufer in Kontakt steht. Durch diese Eingriffs- und Berührungskontakte des Innen- und Außenläufers mit bzw. ohne Zwischenschaltung des sichelförmigen Steges wird die Ausnehmung des Pumpendeckels nach Verschließen der Ausnehmung mit einer Verschlussplatte in zwei Druckkammern geteilt. Die eine Druckkammer wird über eine Öffnung in der Verschlussplatte und in der daran angrenzenden Anschlussplatte mit dem Tank verbunden, während in der andere Druckkammer durch die Rotationsbewegung des Innen- und Außenläufers das Hydraulikfluid der ersten Druckkammer komprimiert wird und über eine Öffnung in der Verschlussplatte und in der daran angrenzenden Anschlussplatte dem Ansaugkanal der Hydropumpe zugeführt wird.

Der Montageprozess der Zahnradpumpe an der Anschlussplatte der Hydropumpe erfolgt in zwei Schritten. In der Vormontage wird der Zahnradsatz inklusive der Steckwelle im Pumpendeckel montiert. In der Endmontage erfolgt die Verschraubung der Baugruppe der Zahnradpumpe über die Verschlussplatte an der Anschlussplatte der Hydropumpe. Für einen optimalen Fluss des Hydraulikfluids ist es entscheidend, dass die beiden nierenförmigen Öffnungen in der Verschlussplatte einerseits in der richtigen Drehwinkelposition zu den beiden Druckkammern im Pumpendeckel und andererseits in der richtigen Drehwinkelposition zu den beiden nierenförmigen Öffnungen der Anschlussplatte fixiert sind. Die Fixierung der nierenförmigen Öffnungen in der Verschlussplatte in der richtigen Drehwinkelstellung zu den Druckkammern des Pumpendeckels und zu den nierenförmigen Öffnungen der Anschlussplatte ist im allgemeinen schwierig, da die Kontaktstellen der Verbindung in der Endmontage vom Monteur nicht einsehbar sind.

In einer bisher bei der Anmelderin üblichen Ausführung wird die Verschlussplatte ohne eine zusätzliche Vorrichtung zur drehwinkelgerechten Fixierung an den Pumpendeckel geschraubt. Hierdurch kann es aufgrund fehlender Sicht zu den Verbindungsstellen u.U. zu Fehlmontagen kommen, die den gesamten Montageprozess unnötig verzögern. Auch ermöglicht diese Lösung kein Halten der Verschlussplatte am Pumpendeckel im Falle einer Überkopf-Montage, was den Montageprozess zusätzlich erschwert und die Arbeitssicherheit in der Montage verschlechtert.

Der Erfindung liegt daher die Aufgabe zugrunde, die Zahnradpumpe mit den Merkmalen gemäß dem Oberbegriff von Anspruch 1 derart weiterzubilden, dass die Verschlussplatte mit ihren nierenförmigen Öffnungen drehwinkelfixiert an den Pumpendeckel gehalten wird, um den Montageprozess des Pumpendeckels inklusive der Verschlussplatte an die Anschlussplatte der Hydropumpe zeiteffizient und unter Wahrung der Arbeitssicherheit durchführen zu können.

Die Aufgabe der Erfindung wird durch eine Zahnradpumpe mit den Merkmalen des Anspruchs 1 gelöst. Vorteilhafte Ausgestaltungen der Erfindung sind in den abhängigen Ansprüchen angegeben.

Die Verschlussplatte wird in einem Vormontageprozess, in dem auch der Zahnradsatz samt Steckwelle in den Pumpendeckel montiert wird, über Halteglieder drehwinkelfixiert an den Pumpendeckel gehalten. Das Halteglied wird vorzugsweise in eine erste Ausnehmung, die an der der Verschlussplatte zugewandten Seite des Pumpendeckels angebracht ist, eingefügt und während des Einfügens derart verformt, dass durch die elastische Verformung in dem Halteglied eine Vorspannkraft aufgebaut wird, über die eine kraftschlüssige Verbindung zum Pumpendeckel realisiert wird. Für die Auslegung der kraftschlüssigen Verbindung zwischen Halteglied und Pumpendeckel - Geometrie des Haltegliedes zur Geometrie der ersten Ausnehmung im Pumpendeckel, Auswahl des Materials des Haltegliedes in Abhängigkeit des Materials des Pumpendeckels - ist das Gewicht der Verschlussplatte zu berücksichtigen.

Das Halten der Verschlussplatte am Pumpendeckel erfolgt vorzugsweise über eine formschlüssige Verbindung mit Hilfe des Haltegliedes. Hierzu wird das Halteglied vorzugsweise mit seinem kegelförmigen Teilkörper durch eine zweite Ausnehmung in der Verschlussplatte, die gegenüber der ersten Ausnehmung im Pumpendeckel positioniert ist, derart geführt, dass die Verschlussplatte, mit ihrer außenseitigen Ausnehmungskante sich am kegelförmigen Teilkörper des Haltegliedes abstützend, vom Halteglied formschlüssig gegen den Pumpendeckel gedrückt wird. Das nötige Kraftpotenzial des kegelförmigen Teilkörpers des Haltegliedes zum Halten der Verschlussplatte wird in Abhängigkeit des Gewichtes der Verschlussplatte durch die genaue Geometrie und das Material des kegelförmigen Teilkörpers des Haltegliedes bestimmt.

Im endmontierten Zustand des Pumpendeckels inklusive der Verschlussplatte an der Anschlussplatte der Hydropumpe werden die Halteglieder vollständig in die ersten Ausnehmungen des Pumpendeckels hinein geschoben, so dass die Verschlußplatte von den Haltegliedern vollständig freigegeben ist und nur noch durch die Verschraubungen gehalten werden, die zwischen Pumpendeckel und Anschlussplatte geführt sind.

Zwei Beispiele des Haltegliedes sind in der Zeichnung dargestellt und werden nachfolgend näher beschrieben. Es zeigen:
- Fig. 1: einen Querschnitt einer erfindungsgemäßen Zahnradpumpe mit einem Halteglied im vormontierten Zustand (links) und im endmontierten Zustand (rechts);
- Fig. 2: eine Draufsicht auf eine Zahnradpumpe;
- Fig. 3: eine Draufsicht auf eine Verschlussplatte;
- Fig. 4: einen Querschnitt einer Verbindung zwischen einer Anschlussplatte einer Hydropumpe, einer Verschlussplatte und einem Pumpendeckel;
- Fig. 5A: einen vergrößerten Querschnitt eines ersten Haltegliedes;
- Fig. 5B: einen vergrößerten Querschnitt eines ersten Haltegliedes im vormontierten Zustand im Bereich VB von Fig. 1 und
- Fig. 5C: einen vergrößerten Querschnitt eines zweiten Haltegliedes im vormontierten Zustand.

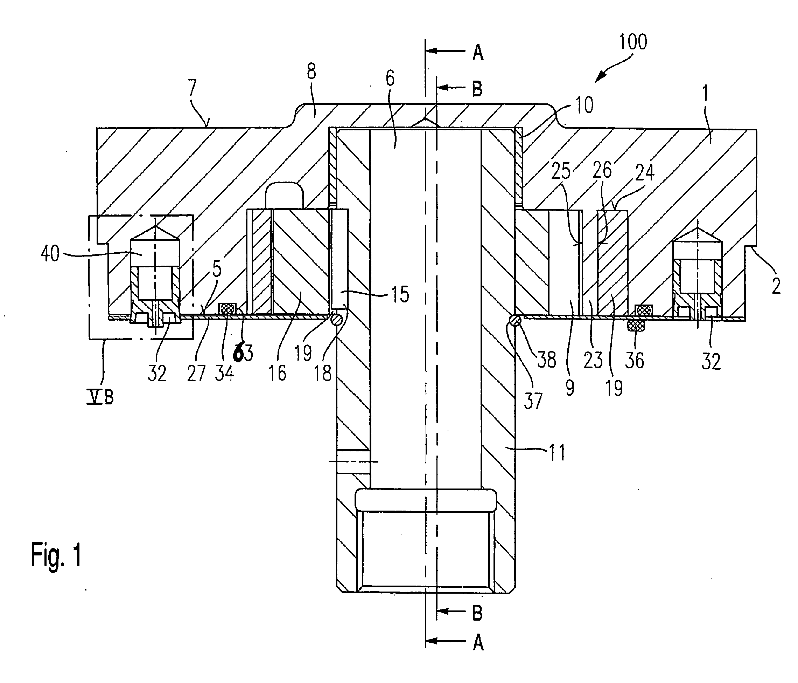

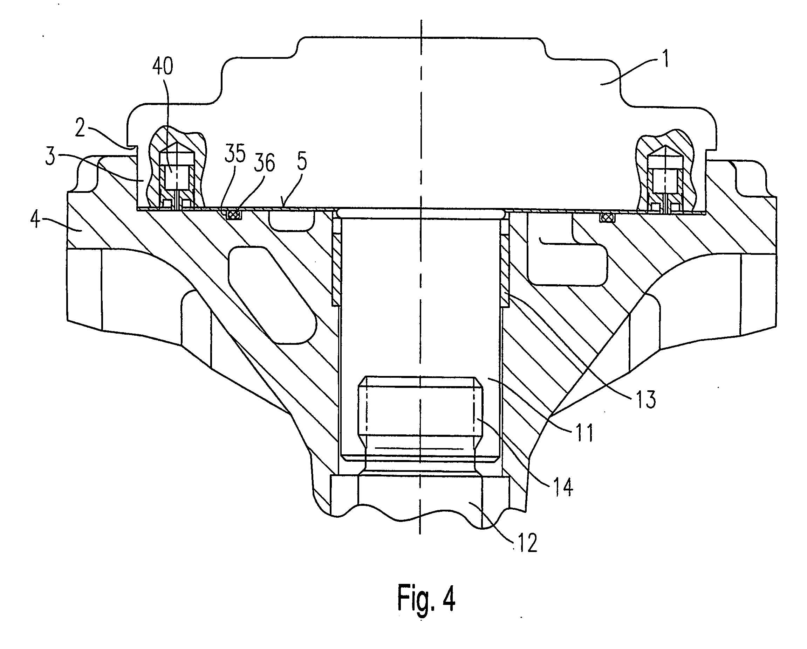

Die erfindungsgemäße Zahnradpumpe wird nachfolgend unter Bezugnahme auf Fig. 1 bis Fig. 5C beschrieben.

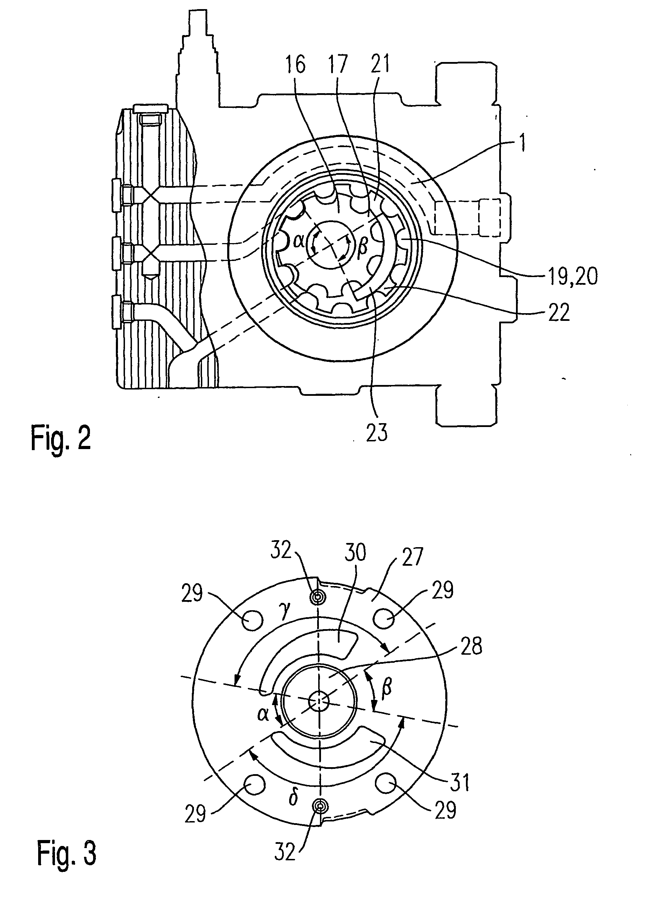

In Fig. 1 und Fig. 2 ist ein Querschnitt einer Zahnradpumpe 100 dargestellt. Die Zahnradpumpe 100 besteht aus einem Pumpendeckel 1, der einen rotationssymmetrischen Querschnitt bezüglich einer Achse A aufweist. Der Pumpendeckel 1, der primär ein zylindrisches Volumen aufweist, besitzt an der zur Hydropumpe weisenden Volumenhälfte eine zur Rotationsachse A gerichtete Stufe 2, die zur Führung des Pumpendeckel 1 in der Ausnehmung 3 der Anschlussplatte 4 der Hydropumpe dient. Im Pumpendeckel 1 ist an der zur Anschlussplatte 4 gerichteten unteren Grundfläche 5 eine zur Rotationsachse A rotationssymmetrische Ausnehmung 6 vorgesehenen. Da diese Ausnehmung 6 in ihrer Tiefe bis zur Höhe der oberen Grundfläche 7 geführt ist, weist der Pumpendeckel 1 eine zur Rotationsachse A rotationssymmetrische Erhöhung mit einem Durchmesser auf, der gegenüber dem Durchmesser der Ausnehmung 6 vergrößert ist. In Richtung zur Anschlussplatte 4 geht die Ausnehmung 6 gestuft in eine vergrößerte Ausnehmung 9 über, die rotationssymmetrisch zu einer zur Rotationsachse A exzentrisch angeordneten Rotationsachse B ausgeführt ist.

In der Ausnehmung 6 ist ein Gleitlager 10 angeordnet, in dem eine Steckwelle 11 drehbar gelagert ist. Diese Steckwelle 11 wird von einer Antriebswelle 12 der Hydropumpe angetrieben und ist zusätzlich im Gleitlager 13 der Anschlussplatte 4 gelagert. Die Steckwelle 11 ist über eine Verbindung 14 - z. B. eine verzahnte Steckverbindung - mit der Antriebswelle 12 verbunden. An die Steckwelle 11 ist im Bereich der Ausnehmung 9 des Pumpendeckels 1 über eine Passfeder 15 ein rotationssymmetrischer Innenläufer 16 mit einer Außenverzahnung 17 rotationsfixiert befestigt. Die Passfeder 15 ist hierbei in eine Nut 18 der Steckwelle 11 und in eine Nut 19 des Innenläufers 16 gesteckt. Die Höhe des Innenläufers 16 entspricht der Tiefe der Ausnehmung 9.

Am Umfang der rotationssymmetrischen Ausnehmung 9 ist ein Außenläufer 19 mit einer Außenverzahnung 20 drehbar gelagert. Das Zahnprofil der Innenverzahnung 20 des Außenläufer 19 entspricht dem Zahnprofil der Außenverzahnung 17 des Innenläufers 16. Die Zahnbreite von Innenläufer 16 und Außenläufer 19 ist auch identisch. Der Kreisdurchmesser des Innenläufers 17 ist kleiner ausgebildet als der Kreisdurchmesser des Außenläufers 19. Aus diesem Grunde und wegen der Exzentrizität der Rotationsachse A des Innenläufers 16 zur Rotationsachse B des Außenläufers 19 sind Innenläufer 16 und Außenläufer 19 nur in einem Drehwinkelbereich α über ihre Innenverzahnung 17 bzw. Außenverzahnung 20 miteinander in Eingriff. Dieser Drehwinkelbereich α befindet sich in dem zur Verbindungsstrecke zwischen Rotationsachse A und Rotationsachse B symmetrischen Drehwinkelbereich der Rotationsachse B. In dem Drehwinkelbereich β, der dem Drehwinkelbereich α gegenüberliegt, ist der Abstand zwischen der Außenverzahnung 17 des Innenläufers 16 und der Innenverzahnung 20 des Außenläufer 19 am größten.

Um den zwischen dem Innenläufer 11 und im Außenläufer 19 verbleibenden Raum der Ausnehmung 9 in zwei separate Druckkammern - die Vordruckkammer 21 und die Niederdruckkammer 22 - aufteilen zu können, wird dieser Abstand zwischen dem Innenläufer 11 und dem Außenläufer 19 durch einen sichelförmigen Steg 23, der an der Bodenfläche 24 der Ausnehmung 9 angeordnet ist und in Richtung der Anschlussplatte 4 weist, überbrückt. Die innenseitige Seitenfläche 25 des sichelförmiger Steges 23 steht im Drehwinkelbereich β mit mindestens einem Zahn des Innenläufers 17 in Kontakt. Die außenseitige Seitenfläche 26 des sichelförmiger Steges 23 steht in Drehwinkelbereich β mit mindestens einem Zahn des Außenläufers 19 in Kontakt.

Zum Verschließen der Ausnehmung 9 wird an der unteren Grundfläche 5 des Pumpendeckel 1 eine Verschlussplatte 27 befestigt, die gemäß Fig. 3 in ihrem Zentrum eine kreisrunde Öffnung 28 mit einem Durchmesser aufweist, der geringfügig größer als der Außendurchmesser der Steckwelle 11 ist. Die Verschlussplatte 27 wird über mehrere dritte Bohrungen 29 an den Pumpendeckel 1 bzw. an die Anschlussplatte 4 verschraubt. Die Verschlussplatte 27 weist in den beiden von den Drehwinkelbereichen α und β begrenzten Drehwinkelbereichen γ und δ jeweils eine nierenförmige Öffnung 30 und 31 auf. Jede dieser nierenförmigen Öffnungen 30 und 31 verjüngt sich in Richtung des Drehwinkelbereiches α. Die nierenförmige Öffnung 30 der Verschlussplatte 27 verbindet die Vordruckkammer 21 der Zahnradpumpe 100 über eine ebenfalls nierenförmige Öffnung der Anschlussplatte 4, die in der Zeichnung nicht dargestellt ist, mit dem Ansaugkanal der Hydropumpe. Die nierenförmigen Öffnung 31 der Verschlussplatte 27 verbindet die Niederdruckkammer 22 der Zahnradpumpe 100 über eine ebenfalls nierenförmigen Öffnung der Anschlussplatte 4, die ebenfalls in der Zeichnung nicht dargestellt ist, mit einem Hydrauliktank auf Niederdruckniveau. Die Verschlussplatte 27 weist ferner zweite Bohrungen 32 zur Führung der im folgenden beschriebenen Halteglieder 33 auf.

In einer ersten kreisringförmigen Ausnehmung 63 an der unteren Grundfläche 5 des Pumpendeckel 1 ist ein erster Dichtungsring 34 zur Abdichtung der Vordruckkammer 21 bzw. der Niederdruckkammer 22 gegenüber der Umgebung vorgesehen. Ganz analog mit gleicher Funktion ist auf der gegenüberliegenden Seite der Verschlussplatte 27 in der Anschlussplatte 4 ebenfalls eine zweite kreisringförmige Ausnehmung 35 zur Aufnahme eines zweiten Dichtungsringes 36 vorgesehen. Im von der Steckwelle 11 nicht ausgefüllten Bereich der zentralen Bohrung 28 der Verschlussplatte 27 ist auf der Steckwelle 11 in Höhe der Verschlussplatte 27 in einer dafür vorgesehenen Nut 37 ein Ring 38 aufgespannt. Dieser Ring 38 hat die Funktion der axialen Fixierung der Steckwelle im Pumpendeckel 1 bzw. in der Anschlussplatte 4.

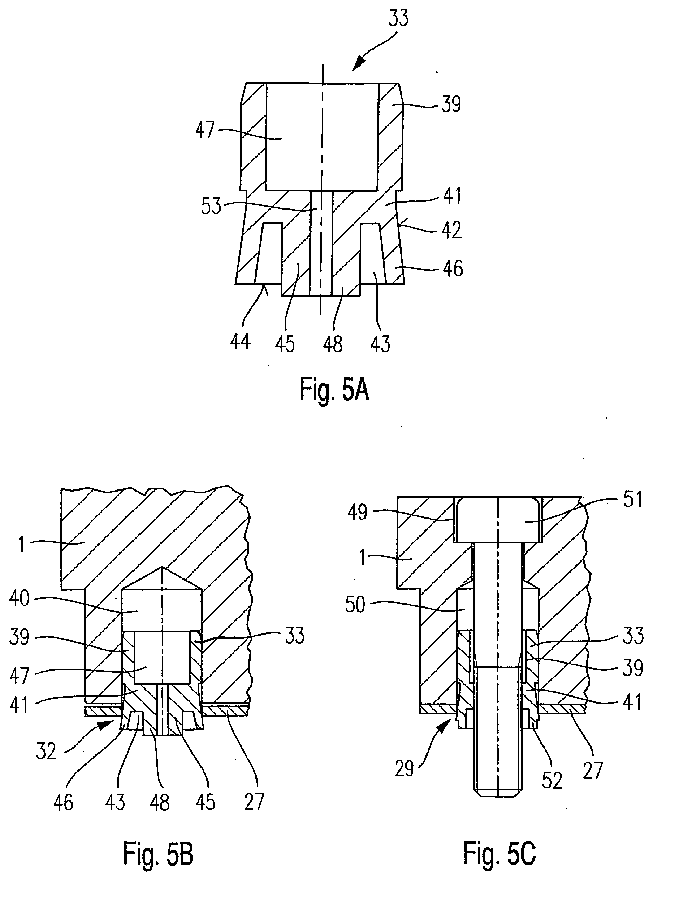

In Fig. 5A ist der Querschnitt einer ersten Form eines Haltegliedes 33 dargestellt. Er besteht aus einem zylindrischen Teilkörper 39, dessen Außendurchmesser geringfügig größer als der Innendurchmesser einer in der unteren Grundfläche 5 des Pumpendeckels 1 angebrachten ersten Bohrung 40 ist. Wird der zylindrischen Teilkörper 39 des Haltegliedes 33 im Rahmen des Vormontageprozesses in die erste Bohrung 40 des Pumpendeckels 1 eingefügt, so kommt es aufgrund des Durchmesserunterschiedes zu einer Verformung des weichelastischen, vorzugsweise aus einem Kunststoffmaterial bestehenden, zylindrischen Teilkörpers 39. Diese Verformung bewirkt den Aufbau einer Vorspannungskraft im weichelastischen zylindrischen Teilkörpers 39, die eine kraftschlüssige Verbindung - Presspassung - zwischen dem Halteglied 33 und dem Pumpendeckel 1 ermöglicht. Alternativ kann der zylindrische Teilkörper 39 auf seiner zylindrischen Mantelfläche auch Schuppen aufweisen, die den Kraftschluss zwischen Halteglied 33 und Pumpendeckel 1 verbessern.

An den zylindrischen Teilkörper 39 des Haltegliedes 33 schließt sich ein kegelförmiger Teilkörper 41 an. Dieser kegelförmige Teilkörper 41 des Haltegliedes 33 wird durch die zweite Bohrung 32 der Verschlussplatte 27 gemäß Fig. 1 (linke Hälfte der Zeichnung) bzw. Fig. 5B derart geführt, dass die Unterkante der zweiten Bohrung 32 der Verschlussplatte 27 auf der äußeren Oberfläche 42 des kegelförmigen Teilkörpers 41 sitzt. Der kegelförmige Teilkörper 41 drückt die Verschlussplatte 27 dabei derart gegen die untere Grundflächen 5 des Pumpendeckels 1, dass über das Halteglied 33 eine kraftschlüssige Verbindung zwischen der Verschlussplatte 27 und dem Pumpendeckel 1 entsteht.

Das Gewicht der Verschlussplatte 27 drückt dabei derart auf die äußere Oberfläche 42 des kegelförmigen Teilkörpers 41 des Haltegliedes 33, dass es seine geringfügigen Verformung des aus einem weichelastischen Kunststoffmaterial bestehenden, kegelförmigen Teilkörpers 41 kommt. Diese Verformung des kegelförmigen Teilkörpers 41 wird durch eine dritte kreisringförmige Ausnehmung 43 an der Grundfläche 44 des kegelförmigen Teilkörpers 41 erleichtert. Diese dritte kreisringförmige Ausnehmung 43 verjüngt sich im Ausführungsbeispiel bis zu ihrem tiefsten Punkt derart, dass im Zentrum des kegelförmigen Teilkörpers 41 ein zylindrischer Unterteilkörper 45 und in der Peripherie des kegelförmigen Teilkörpers 41 ein hohlkegelförmiger Unterteilkörper 46 mit einer konstanten Wandstärke entsteht.

Das Halteglied 33 besitzt eine durchgehende, gestufte Innenbohrung 47,53 , bestehend aus dem im zylindrischen Teilkörper 39 befindlichen Abschnitt 47 der Innenbohrung und dem im kegelförmigen Teilkörper befindlichen Abschnitt 53 der Innenbohrung, zur Entlüftung der ersten Bohrung 40 im Pumpendeckel 1. Der Innendurchmesser des im zylindrischen Teilkörper 39 befindlichen Abschnittes 47 der Innenbohrung ist dabei deutlich größer ausgeprägt als der Innendurchmesser des im kegelförmigen Teilkörper 41 befindlichen Abschnitt 53 der Innenbohrung.

Der zylindrische Unterteilkörper 45 weist gegenüber der Grundfläche 44 des kegelförmigen Teilkörpers 41 einen Überstand 48 auf, der mindestens der Dicke der Verschlussplatte 27 entspricht. Auf diese Weise wird im endmontierten Zustand der Zahnradpumpe 100, wenn der Pumpendeckel 1 über die Verschlussplatte 27 an die Anschlussplatte 4 der Hydropumpe befestigt ist, das Halteglied 33 derart in die erste Bohrung 40 des Pumpendeckel 1 positioniert, dass der kegelförmige Teilkörper 41 gemäß Fig. 1 (rechte Hälfte der Zeichnung) sich vollständig in der ersten Bohrung 40 befindet und damit keinen Kontakt mehr zur Anschlussplatte 27 hat.

In Fig. 5C ist eine zweite Form eines Haltegliedes 33 dargestellt. Hierbei wird das Halteglied 33 nicht in die zweite Bohrung 32 der Verschlussplatte 27 geführt und anschließend in die erste Bohrung 40 des Pumpendeckel 1 gefügt, sondern kostensparend in die für die Befestigung der Verschlussplatte 27 am Pumpendeckel 1 bzw. an der Anschlussplatte 4 vorgesehene dritte Bohrung 29 geführt und anschließend in die ebenfalls für die Befestigung von Pumpendeckel 1, Verschlussplatte 27 und Anschlussplatte 4 vorgesehene vierte Bohrung 49 im Pumpendeckel 1 eingefügt. Jede dieser vierten Bohrungen 49 im Pumpendeckel 1 wird hierzu im Bereich der unteren Grundfläche 5 des Pumpendeckel 1 auf eine fünfte Bohrung 50 in der Größe der ersten Bohrung 40 vergrößert.

Durch die Innenbohrung 47,53 des Haltegliedes 33 der zweiten Ausführungsform wird eine Schraube 51 zur Verschraubung des Pumpendeckels 1, der Verschlussplatte 27 und der Anschlussplatte 4 geführt. Hierzu wird der Innendurchmesser des im kegelförmigen Teilkörper 41 befindlichen Abschnittes 53 der Innenbohrung deutlich größer ausgestaltet als in der ersten Ausführungsform des Haltegliedes 33.

Der zylindrische Unterteilkörper 45 entfällt im zweiten Beispiel des Haltegliedes 33 deshalb vollkommen. Der Überstand 48 des zylindrischen Unterteilkörpers 45 in der ersten Form des Haltegliedes 33 wird in der zweiten Form des Haltegliedes als hohlzylindrischer Unterteilkörper 52 realisiert, der sich an den hohlkegelförmiger Unterteilkörper 46 anschließt. Dieser als Überstand wirkende hohlzylindrische Unterteilkörper 52 weist mindestens die gleiche Höhe wie die Dicke der Verschlussplatte 27 auf, so dass auch bei dieser zweiten Form des Haltegliedes 33 der kegelförmige Teilkörper 41 im endmontierten Zustand der Zahnradpumpe 100 vollständig in der fünften Bohrung 50 positioniert ist und keinen Kontakt mehr zur Verschlussplatte 27 hat.

Im laufenden Betrieb der Hydraulikpumpe wird aus einem Hydrauliktank Hydraulikfluid auf Niederdruckniveau über eine Zuleitung, die nierenförmige Öffnung der Anschlussplatte 4 und die nierenförmige Öffnung 31 der Verschlussplatte 27 in die Niederdruckkammer 22 im Pumpendeckel 1 gesaugt. Das Niederdruck-Hydraulikfluid wird durch die Zahnradpumpe 100, bestehend aus dem Innenläufer 16 und dem Außenläufer 19, beim Übergang von der Niederdruckkammer 22 in die Vordruckkammer 21 komprimiert und über die nierenförmige Öffnung 30 der Verschlussplatte 27, die nierenförmige Öffnung der Anschlussplatte 4 und eine Ableitung in den Ansaugkanal der Hydropumpe gefördert.

Die Erfindung ist nicht auf die dargestellten Ausführungsbeispiele beschränkt. Die Merkmale der einzelnen Ausführungsbeispiele können auch beliebig miteinander kombiniert werden.

## Patentansprüche

1. Zahnradpumpe (100) mit einem Pumpendeckel (1), einem Innenläufer (16), der in einer Ausnehmung (9) des Pumpendeckels (1) drehbar angeordnet auf einer antreibbaren Steckwelle (11) rotationsfixiert ausgebildet ist, und einem Außenläufer (19), der in der Ausnehmung (9) des Pumpendeckels (1) derart exzentrisch zur Drehachse (A) des Innenläufers (16) drehbar angeordnet ist, dass der Außenläufer (19) nur in einem ersten Drehwinkelbereich (α) mit dem Innenläufer (16) in Eingriff ist und in einem dem ersten Drehwinkelbereich (α) gegenüberliegenden zweiten Drehwinkelbereich (β) mit einer innenseitigen Fläche (25) eines in der Ausnehmung (9) angeordneten Steges (23) in Kontakt steht, der wiederum auf seiner außenseitigen Fläche (26) mit dem Außenläufer (19) in Kontakt steht, so dass sich nach Verschließen der Ausnehmung (9) mit einer Verschlussplatte (27) in der Ausnehmung (9) eine VordruckKammer (21) und eine Niederdruck-Kammer (22) ausbildet, wobei ein Halteglied (33), das im Pumpendeckel (1) gehalten ist, im vormontierten Zustand der Zahnradpumpe (100) die Verschlussplatte (27) drehwinkelfixiert an dem Pumpendeckel (1) hält,
**dadurch gekennzeichnet,**
**dass** die Verschlussplatte (27) im endmontierten Zustand der Zahnradpumpe (100) vom Halteglied (33) freigegeben ist.

2. Zahnradpumpe nach Anspruch 1,
**dadurch gekennzeichnet,**
**dass** das Halteglied (33) in einer im Pumpendeckel (1) angebrachten ersten Ausnehmung (40) gehalten ist und im vormontierten Zustand der Zahnradpumpe (100) die Verschlussplatte (27) über eine in der Verschlussplatte (27) angebrachte zweite Ausnehmung (32) drehwinkelfixiert an dem Pumpendeckel (1) hält.

3. Zahnradpumpe nach Anspruch 2,
**dadurch gekennzeichnet,**
**dass** das Halteglied (33) im endmontierten Zustand der Zahnradpumpe (100) in der ersten Ausnehmung (40) soweit verschoben ist, dass die Verschlussplatte (27) vom Halteglied (33) nicht mehr gehalten wird.

4. Zahnradpumpe nach einem der Ansprüche 1 bis 3,
**dadurch gekennzeichnet,**
**dass** das Halteglied (33) aus einem verformbaren Kunststoff besteht.

5. Zahnradpumpe nach Anspruch 2 oder 3,
**dadurch gekennzeichnet,**
**dass** das Halteglied (33) aus einem zylindrischen Teilkörper (39) besteht, dessen Außendurchmesser geringfügig größer als der Innendurchmesser der ersten Ausnehmung (40) ist, so dass bei Einfügen des Haltegliedes (33) in die erste Ausnehmung (40) der zylindrische Teilkörper (39) eine bestimmte radiale Vorspannung erfährt, mittels derer eine kraftschlüssige Verbindung zwischen dem Halteglied (33) und dem Pumpendeckel (1) besteht.

6. Zahnradpumpe nach Anspruch 5,
**dadurch gekennzeichnet,**
**dass** die Oberfläche des zylindrischen Teilkörpers (39) des Haltegliedes (33) Schuppen aufweist.

7. Zahnradpumpe nach Anspruch 5 oder 6,
**dadurch gekennzeichnet,**
**dass** der zylindrische Teilkörper (39) des Haltegliedes (33) zur Aufnahme einer Schraube (51) eine Innenbohrung (47) aufweist, deren Innendurchmesser dem Außendurchmesser der Schraube (51) in etwa entspricht.

8. Zahnradpumpe nach einem der Ansprüche 5 bis 7,
**dadurch gekennzeichnet,**
**dass** sich an den zylindrischen Teilkörper (39) ein kegelförmiger Teilkörper (41) anschließt, der durch die zweite Ausnehmung (32) geführt ist und im endmontierten Zustand des Pumpendeckels (1) mit seiner äußeren Oberfläche (42) die zweite Ausnehmung (32) der Verschlussplatte (27) derart berührt, dass über das Halteglied (33) eine formschlüssige Verbindung zwischen dem Pumpendeckel (1) und der Verschlussplatte (27) realisiert ist.

9. Zahnradpumpe nach Anspruch 7,
**dadurch gekennzeichnet,**
**dass** ein im kegelförmigen Teilkörper (41) befindlicher Abschnitt (53) einer Innenbohrung in Fortsetzung eines im zylindrischen Teilkörper (39) befindlichen Abschnittes (47) der Innenbohrung, dessen Durchmesser gegenüber dem Durchmesser des im zylindrischen Teilkörper (39) befindlichen Abschnittes (47) der Innenbohrung kleiner ausgeführt ist, zur Entlüftung der ersten Ausnehmung (40) des Pumpendeckels (1) dient.

10. Zahnradpumpe nach Anspruch 8 oder 9,
**dadurch gekennzeichnet,**
**dass** der kegelförmige Teilkörper (41) an seiner Grundfläche (44) eine kreisringförmige Ausnehmung (43) aufweist, deren Kreisringfläche sich mit zunehmender Ausnehmungstiefe derart verjüngt, dass dadurch bis auf Höhe des Bodens der kreisringförmigen Ausnehmung (43) im Zentrum des kegelförmigen Teilkörpers (41) ein zylindrischer Unterteilkörper (45) und an der Peripherie des kegelförmigen Teilkörpers (41) ein hohlkegelförmiger Unterteilkörper (46) konstanter Wanddicke ausgebildet sind.

11. Zahnradpumpe nach Anspruch 10,
**dadurch gekennzeichnet,**
**dass** der kegelförmige Teilkörper (41) aufgrund der kreisringförmige Ausnehmung (43) derart verformbar ist, dass er mit seinem hohlkegelförmigen Unterteilkörper (46) im endmontierten Zustand der Zahnradpumpe (100) vollständig in die erste Ausnehmung (40) einführbar ist.

12. Zahnradpumpe nach Anspruch 10 oder 11,
**dadurch gekennzeichnet,**
**dass** der zylindrische Unterteilkörper (45) gegenüber der Grundfläche (44) des kegelförmigen Teilkörpers (41) um die Dicke der Verschlussplatte (27) verlängert ist, so dass im endmontierten Zustand der Zahnradpumpe (100) der hohlkegelförmige Unterteilkörper (46) vollständig in die erste Ausnehmung (40) eingeführt ist und somit kein Kontakt mehr zur Verschlussplatte (27) besteht.

13. Zahnradpumpe nach Anspruch 10 oder 11,
**dadurch gekennzeichnet,**
**dass** sich an den hohlkegelförmigen Unterteilkörper (46) ein hohlzylindrischer Unterteilkörper (52) anschließt, dessen Höhe der Dicke der Verschlussplatte (27) entspricht, so dass im endmontierten Zustand der Zahnradpumpe (100) der hohlkegelförmige Unterteilkörper (46) vollständig in die erste Ausnehmung (40) eingeführt ist und somit kein Kontakt mehr zur Verschlussplatte (27) besteht.

14. Zahnradpumpe nach einem der Ansprüche 1 bis 13,
**dadurch gekennzeichnet**,
das der Steg (23) in der Ausnehmung (9) des Pumpendeckels (1) sichelförmig ist.

15. Zahnradpumpe nach einem der Ansprüche 1 bis 14,
**dadurch gekennzeichnet,**
**dass** im endmontierten Zustand der Zahnradpumpe (100) der Pumpendeckel (1) mit der drehwinkelfixierten Verschussplatte (27) über Schraubverbindungen an einer Anschlussplatte (4) einer Hydropumpe befestigt ist.

16. Zahnradpumpe nach Anspruch 15,
**dadurch gekennzeichnet,**
**dass** die Vordruckkammer (21) über nierenförmige Ausnehmungen (30) in der Verschlußplatte (27) und der Anschlussplatte (4) mit einem Ansaugkanal der Hydropumpe und die Niederdruckkammer (22) über nierenförmige Ausnehmungen (31) in der Verschlußplatte (27) und der Anschlussplatte (4) mit einem Hydrauliktank verbunden ist.

17. Zahnradpumpe nach Anspruch 15 oder 16,
**dadurch gekennzeichnet,**
**dass** die Steckwelle (11) in einem ersten Gleitlager (10) im Pumpendeckel (1) und in einem zweiten Gleitlager (13) in der Anschlussplatte (4) drehbar gelagert ist.

18. Zahnradpumpe nach einem der Ansprüche 1 bis 17,
**dadurch gekennzeichnet,**
**dass** der Innenläufer (16) durch eine Spannfeder (15), die in eine Nut (19) des Innenläufers (16) eingreift, an der Steckwelle (11) rotationsfixiert befestigt ist.

19. Zahnradpumpe nach einem der Ansprüche 1 bis 18,
**dadurch gekennzeichnet,**
**dass** die Steckwelle (11) im endmontierten Zustand des Zahnradpumpensatzes (100) durch einen Rundring (38), der auf der Steckwelle (11) in Höhe der Verschlussplatte (27) aufgebracht ist, in ihrer axialen Position fixiert ist.

## Claims

1. Gear pump (100) comprising a pump cover (1), an internal rotor (16) disposed rotatably in a recess (9) of the pump cover (1) and formed in a rotationally fixed manner on a drivable plug-in shaft (11), and an external rotor (19) rotatably disposed in the recess (9) of the pump cover (1) in such an eccentric manner relative the axis of rotation (A) of the internal rotor (16) that the external rotor (19) is in mesh with the internal rotor (16) only in a first angle-of-rotation range (α) and in a second angle-of-rotation range (β) lying opposite the first angle-of-rotation range (α) is in contact with an inner surface (25) of a web (23), which is disposed in the recess (9) and is in turn in contact at its outer surface (26) with the external rotor (19), so that after closing of the recess (9) by a cover plate (27) there is formed in the recess (9) an admission pressure chamber (21) and a low-pressure chamber (22), wherein a holding element (33), which is held in the pump cover (1), in the initial assembled state of the gear pump (100) holds the cover plate (27) at a fixed angle of rotation on the pump cover (1)
**characterized in**
**that** the cover plate (27) in the final assembled state of the gear pump (100) is released by the holding element (33) ..

2. Gear pump according to claim 1,
**characterized in**
**that** the holding element (33) is held in a first recess (40) provided in the pump cover (1) and in the initial assembled state of the gear pump (100) holds the cover plate (27) by means of a second recess (32) provided in the cover plate (27) at a fixed angle of rotation on the pump cover (1).

3. Gear pump according to claim 2,
**characterized in**
**that** the holding element (33) in the final assembled state of the gear pump (100) is displaced in the first recess (40) to such an extent that the cover plate (27) is no longer held by the holding element (33).

4. Gear pump according to one of claims 1 to 3,
**characterized in**
**that** the holding element (33) is made of a deformable plastics material.

5. Gear pump according to claim 2 or 3,
**characterized in**
**that** the holding element (33) comprises a cylindrical partial body (39), the outside diameter of which is slightly larger than the inside diameter of the first recess (40), so that in the course of insertion of the holding element (33) into the first recess (40) the cylindrical partial body (39) experiences a specific radial bias, by means of which a force-locking connection exists between the holding element (33) and the pump cover (1).

6. Gear pump according to claim 5,
**characterized in**
**that** the surface of the cylindrical partial body (39) of the holding element (33) has scales.

7. Gear pump according to claim 5 or 6,
**characterized in**
**that** the cylindrical partial body (39) of the holding element (33) for receiving a screw (51) has an inner bore (47), the inside diameter of which approximately corresponds to the outside diameter of the screw (51).

8. Gear pump according to one of claims 5 to 7,
**characterized in**
**that** adjoining the cylindrical partial body (39) is a conical partial body (41), which is passed through the second recess (32) and in the final assembled state of the pump cover (1) is in contact by its outer surface (42) with the second recess (32) of the cover plate (27) in such a way that by means of the holding element (33) a positive connection is realized between the pump cover (1) and the cover plate (27).

9. Gear pump according to claim 7,
**characterized in**
**that** a portion (53) of an inner bore, which is situated in the conical partial body (41) in a continuation of an inner bore portion (47) situated in the cylindrical partial body (39) and the diameter of which is designed smaller than the diameter of the inner bore portion (47) situated in the cylindrical partial body (39), is used to ventilate the first recess (40) of the pump cover (1).

10. Gear pump according to claim 8 or 9,
**characterized in**
**that** the conical partial body (41) in its area (44) has an annular recess (43), the annular area of which tapers with increasing recess depth in such a way that up to the height of the base of the annular recess (43) there are formed in the centre of the conical partial body (41) a cylindrical bottom partial body (45) and at the periphery of the conical partial body (41) a hollow-cone-shaped bottom partial body (46) of a constant wall thickness.

11. Gear pump according to claim 10,
**characterized in**
**that** the conical partial body (41) owing to the annular recess (43) is deformable in such a way that it is introducible by its hollow-cone-shaped bottom partial body (46) entirely into the first recess (40) in the final assembled state of the gear pump (100).

12. Gear pump according to claim 10 or 11,
**characterized in**
**that** the cylindrical bottom partial body (45) is lengthened compared to the area (44) of the conical partial body (41) by the thickness of the cover plate (27), so that in the final assembled state of the gear pump (100) the hollow-cone-shaped bottom partial body (46) is introduced entirely into the first recess (40) and there is therefore no longer any contact with the cover plate (27).

13. Gear pump according to claim 10 or 11,
**characterized in**
**that** the hollow-cone-shaped bottom partial body (46) is adjoined by a hollow-cylindrical bottom partial body (52), the height of which corresponds to the thickness of the cover plate (27), so that in the final assembled state of the gear pump (100) the hollow-cone-shaped bottom partial body (46) is introduced entirely into the first recess (40) and there is therefore no longer any contact with the cover plate (27).

14. Gear pump according to one of claims 1 to 13,
**characterized in**
**that** the web (23) in the recess (9) of the pump cover (1) is sickle-shaped.

15. Gear pump according to one of claims 1 to 14,
**characterized in**
**that** in the final assembled state of the gear pump (100) the pump cover (1) with the cover plate (27) at a fixed angle of rotation is fastened by means of screw connections to a connection plate (4) of a hydraulic pump.

16. Gear pump according to claim 15,
**characterized in**
**that** the admission pressure chamber (21) is connected by kidney-shaped recesses (30) in the cover plate (27) and the connection plate (4) to an intake channel of the hydraulic pump and the low-pressure chamber (22) is connected by kidney-shaped recesses (31) in the cover plate (27) and the connection plate (4) to a hydraulic tank.

17. Gear pump according to claim 15 or 16,
**characterized in**
**that** the plug-in shaft (11) is rotatably mounted in a first plain bearing (10) in the pump cover (1) and in a second plain bearing (13) in the connection plate (4).

18. Gear pump according to one of claims 1 to 17,
**characterized in**
**that** the internal rotor (16) is fastened by a clamping key (15), which engages into a keyway (19) of the internal rotor (16), in a rotationally fixed manner to the plug-in shaft (11).

19. Gear pump according to one of claims 1 to 18,
**characterized in**
**that** the plug-in shaft (11) in the final assembled state of the gear pump (100) is fixed in its axial position by means of a round ring (38), which is fitted on the plug-in shaft (11) at the level of the cover plate (27).

## Revendications

1. Pompe à engrenages (100) comportant un couvercle de pompe (1), un rotor intérieur (16) qui est disposé de manière rotative dans un évidement (9) du couvercle de pompe (1) et est monté solidaire en rotation sur une broche (11) apte à être entraînée, et un rotor extérieur (19) qui est monté de manière rotative dans l'évidement (9) du couvercle de pompe (1) de manière excentrée par rapport à l'axe de révolution (A) du rotor intérieur (16) de telle sorte que le rotor extérieur (19) vient en prise avec le rotor intérieur (16) uniquement dans une première zone angulaire (α) et, est en contact dans une deuxième zone angulaire (β) opposée à la première zone angulaire (α) avec une surface intérieure (25) d'une nervure (23) agencée dans l'évidement (9), laquelle est également en contact sur sa surface extérieure (26) avec le rotor extérieur (19), de telle sorte que, après l'obturation de l'évidement (9) avec une plaque de fermeture (27), il se forme dans l'évidement (9) une chambre de pression d'alimentation (21) et une chambre de basse pression (22), sachant qu'un élément de retenue (33), qui est maintenu dans le couvercle de pompe (1), maintient la plaque de fermeture (27) dans une position angulaire déterminée sur le couvercle de pompe (1) lorsque la pompe à engrenages (100) est à l'état de montage préliminaire,
**caractérisée en ce**
**que** la plaque de fermeture (27), lorsque la pompe à engrenages (100) est à l'état de montage final, est dégagée de l'élément de retenue (33).

2. Pompe à engrenages selon la revendication 1,
**caractérisée en ce**
**que** l'élément de retenue (33) est maintenu dans un premier évidement (40) ménagé dans le couvercle de pompe (1) et, lorsque la pompe à engrenages (100) est à l'état de montage préliminaire, la plaque de fermeture (27) est maintenue dans une position angulaire définie contre le couvercle de pompe (1) par l'intermédiaire d'un deuxième évidement (32) ménagé dans la plaque de fermeture (27).

3. Pompe à engrenages selon la revendication 2,
**caractérisée en ce**
**que** l'élément de retenue (33), lorsque la pompe à engrenages (100) est à l'état de montage final, est déplacé dans le premier évidement (40) jusqu'à ce que la plaque de fermeture (27) ne soit plus maintenue par l'élément de retenue (33).

4. Pompe à engrenages selon l'une quelconque des revendications 1 à 3,
**caractérisée en ce**
**que** l'élément de retenue (33) est réalisé dans une matière plastique déformable.

5. Pompe à engrenages selon la revendication 2 ou 3,
**caractérisée en ce**
**que** l'élément de retenue (33) est formé par un corps partiel cylindrique (39), dont le diamètre extérieur est légèrement plus grand que le diamètre intérieur du premier évidement (40), de telle sorte que, lorsque l'élément de retenue (33) est introduit dans le premier évidement (40), le corps partiel cylindrique (39) est soumis à une précontrainte radiale déterminée, sous l'effet de laquelle est généré un assemblage commandé par une force entre l'élément de retenue (33) et le couvercle de pompe (1).

6. Pompe à engrenages selon la revendication 5,
**caractérisée en ce**
**que** la surface du corps partiel cylindrique (39) de l'élément de retenue (33) comporte des écailles.

7. Pompe à engrenages selon la revendication 5 ou 6,
**caractérisée en ce**
**que** le corps partiel cylindrique (39) de l'élément de retenue (33) comporte un alésage (47), qui est destiné à recevoir une vis (51) et dont le diamètre intérieur correspond sensiblement au diamètre extérieur de la vis (51).

8. Pompe à engrenages selon l'une quelconque des revendications 5 à 7,
**caractérisée en ce**
**que** le corps partiel cylindrique (39) est prolongé par un corps partiel conique (41), qui est guidé à travers le deuxième évidement (32) et, lorsque le couvercle de pompe (1) est à l'état de montage final, vient en contact par sa surface extérieure (42) contre le deuxième évidement (32) de la plaque de fermeture (27), de telle sorte que, par l'intermédiaire de l'élément de retenue (33), un assemblage par conjugaison de forme est réalisé entre le couvercle de pompe (1) et la plaque de fermeture (27).

9. Pompe à engrenages selon la revendication 7,
**caractérisée en ce**
**que** dans le prolongement d'un tronçon (47) de l'alésage situé dans le corps partiel cylindrique (39), un tronçon (53) d'un alésage situé dans le corps partiel conique (41), dont le diamètre est inférieur à celui du tronçon (47) de l'alésage situé dans le corps partiel cylindrique (39), est destiné à purger le premier évidement (40) du couvercle de pompe (1).

10. Pompe à engrenages selon la revendication 8 ou 9,
**caractérisée en ce**
**que** le corps partiel conique (41) comporte sur sa surface de base (44) un évidement annulaire (43), dont la surface annulaire se rétrécit avec l'augmentation de la profondeur de l'évidement, de telle sorte que, jusqu'au niveau du fond de l'évidement annulaire (43), sont réalisés de ce fait, au centre du corps partiel conique (41), un corps partiel inférieur cylindrique (45) et, à la périphérie du corps partiel conique (41), un corps partiel inférieur conique creux (46) avec une épaisseur de paroi constante.

11. Pompe à engrenages selon la revendication 10,
**caractérisée en ce**
**que**, en raison de l'évidement annulaire (43), le corps partiel conique (41) est déformable de telle sorte que, lorsque la pompe à engrenages (100) est à l'état de montage final, il peut être introduit avec son corps partiel inférieur conique creux (46) complètement dans le premier évidement (40).

12. Pompe à engrenages selon la revendication 10 ou 11,
**caractérisée en ce**
**que** le corps partiel inférieur cylindrique (45) est prolongé par rapport à la surface de base (44) du corps partiel conique (41) selon une longueur correspondant à l'épaisseur de la plaque de fermeture (27), de telle sorte que, lorsque la pompe à engrenages (100) est à l'état de montage final, le corps partiel inférieur conique creux (46) est complètement introduit dans le premier évidement (40) et qu'il n'existe donc plus aucun contact avec la plaque de fermeture (27).

13. Pompe à engrenages selon la revendication 10 ou 11,
**caractérisée en ce**
**qu'**un corps partiel inférieur cylindrique creux (52), dont la hauteur correspond à l'épaisseur de la plaque de fermeture (27), prolonge le corps partiel inférieur conique creux (46), de telle sorte que, lorsque la pompe à engrenages (100) est à l'état de montage final, le corps partiel inférieur conique creux (46) est introduit complètement dans le premier évidement (40) et qu'il n'existe donc plus aucun contact avec la plaque de fermeture (27).

14. Pompe à engrenages selon l'une quelconque des revendications 1 à 13,
**caractérisée en ce**
**que** la nervure (23) dans l'évidement (9) du couvercle de pompe (1) est en forme de croissant.

15. Pompe à engrenages selon l'une quelconque des revendications 1 à 14,
**caractérisée en ce**
**que**, lorsque la pompe à engrenages (100) est à l'état de montage final, le couvercle de pompe (1) est fixé avec la plaque de fermeture (27) en position angulaire déterminée sur une plaque de raccordement (4) d'une pompe hydraulique au moyen d'assemblages vissés.

16. Pompe à engrenages selon la revendication 15,
**caractérisée en ce**
**que** la chambre de pression d'alimentation (21) est reliée à un conduit d'aspiration de la pompe hydraulique par l'intermédiaire d'évidements réniformes (30) dans la plaque de fermeture (27) et dans la plaque de raccordement (4), et la chambre de basse pression (22) est reliée à un réservoir hydraulique par l'intermédiaire d'évidements réniformes (31) dans la plaque de fermeture (27) et dans la plaque de raccordement (4).

17. Pompe à engrenages selon la revendication 15 ou 16,
**caractérisée en ce**
**que** la broche (11) est montée de manière rotative dans un premier palier de glissement (10) dans le couvercle de pompe (1) et dans un deuxième palier de glissement (13) dans la plaque de raccordement (4).

18. Pompe à engrenages selon l'une quelconque des revendications 1 à 17,
**caractérisée en ce**
**que** le rotor intérieur (16) est fixé sur la broche (11) de manière solidaire en rotation au moyen d'une clavette parallèle (15) qui s'engage dans une rainure (19) du rotor intérieur (16).

19. Pompe à engrenages selon l'une quelconque des revendications 1 à 18,
**caractérisée en ce**
**que**, lorsque l'ensemble de pompes à engrenages (100) est à l'état de montage final, la broche (11) est fixée dans sa position axiale au moyen d'une bague circulaire (38) qui est montée sur la broche (11) au niveau de la plaque de fermeture (27).
